# EUROPÄISCHE PATENTSCHRIFT

(11) **EP 1 939 519 B1**
(45) Veröffentlichungstag und Bekanntmachung des Hinweises auf die Patenterteilung: **29.06.2011**
(21) Anmeldenummer: 07120769.0
(22) Anmeldetag: 15.11.2007
(51) Int. Cl.: F16M 11/20

(54) **Stativ**
Tripod
Trépied

(30) Priorität: 27.12.2006 DE 102006061664
(43) Veröffentlichungstag der Anmeldung: 02.07.2008
(73) Patentinhaber: Robert Bosch GmbH, 70442 Stuttgart (DE)
(72) Erfinder: Lukas, Heiner, 70197 Stuttgart (DE)

(56) Entgegenhaltungen:
- EP-A- 1 719 923
- DE-A1- 4 239 405
- DE-U1-202005 015 263
- US-A- 5 390 885
- US-A1- 2004 075 031
- US-B1- 6 254 044

## Beschreibung

Die Erfindung betrifft ein Stativ gemäß dem Oberbegriff des Anspruchs 1.

Aus der DE 20 2005 015 263 U1 ist ein Stativ mit einem Stativkopf und drei Stativbeinen bekannt, die lösbar an dem Stativkopf befestigt und zu einer längenveränderbaren Klemmstange zum Verklemmen zwischen zwei beabstandeten Begrenzungen zusammensetzbar sind. Bei dem bekannten Stativ sind die drei Stativbeine über jeweils ein Kipp- oder Schwenkgelenk an dem Stativkopf angelenkt. Dabei sind die Gelenke in Umfangsrichtung um etwa 120° versetzt zueinander angeordnet, wodurch das Stativ im zusammengelegten Zustand neben der aufgrund der Stativbeinlänge unvermeidbar großen Längenerstreckung eine große Breiten- und Höhenerstrecken aufweist. Ferner ist die Anzahl der Stativkopfgelenke groß, wodurch das bekannte Stativ nur kostenintensiv herstellbar und verschleißanfällig ist. Die Stative gemäß dem Oberbegriff des Anspruchs 1 sind von den Dokumenten US 5390885, US 6254044 B1 und US 2004/0075031 A1 bekannt.

### Offenbarung der Erfindung

### Technische Aufgabe

Der Erfindung liegt daher die Aufgabe zugrunde, ein einfaches, robustes und standsicheres Stativ vorzuschlagen, das mit einer geringeren Anzahl von Stativkopfgelenken auskommt und das flach zusammenlegbar ist.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmale.

Der Erfindung liegt der Gedanke zugrunde, den Stativkopf dreiteilig auszubilden, wobei auf zwei gegenüberliegenden Seiten des Mittelteils jeweils ein Seitenteil mittels jeweils einem Gelenk mit dem Mittelteil gelenkig verbunden ist. Bei dem erfindungsgemäßen Stativ ist die Anzahl der Stativkopfgelenke daher mit Vorteil auf zwei reduziert. Ferner lässt sich das erfindungsgemäße Stativ mit den beiden Stativkopfgelenken aufgrund des dreigliedrigen Aufbaus des Stativkopfes flach zusammenlegen, wodurch der Raumbedarf im zusammengeklappten Zustand gering ist und die hierdurch erhaltene kompakte Transportkonfiguration gut zu transportieren und zu verstauen ist. Bevorzugt weist das Stativ einen integrierten Schultertragegurt für einen bequemen Transport auf. Der Schultergurt kann beispielsweise einends am Stativkopf und anderenends an einem der Stativbeine, vorzugsweise endseitig am mittleren Stativbein festgelegt sein. Das erfindungsgemäße Stativ eignet sich insbesondere zur Aufnahme von Messgeräten, wie selbsteinstellende Nivelliergeräte.

In Weiterbildung der Erfindung ist mit Vorteil vorgesehen, dass die beiden Schwenkachsen der Gelenke nicht miteinander fluchtend bzw. auf einer gemeinsamen Achse angeordnet sind, sondern dass die beiden Schwenkachsen einen Winkel α einschließen, wobei der Winkel α aus einem Winkelbereich von 0° < α < 180° zu wählen ist. Bevorzugt ist eine Ausführungsform, bei der die beiden Schwenkachsen einen Winkel α von etwa 110° einschließen. Anders ausgedrückt verlaufen die schrägen, sich quer zu den Schwenkachsen erstreckenden Schwenkebenen zwischen dem Mittelteil und den beiden Seitenteilen jeweils unter einem Winkel β zu einer eine Längsachse des mittleren Stativbeins im 90°-Winkel schneidenden Verbindungsachse, welche beide Schwenkachsen schneidet. Der Winkel β wird dabei bevorzugt aus einem Winkelbereich von 0° < β < 90° gewählt. Vorzugsweise sind die Winkel β beider Kontaktflächenpaare identisch, wobei β bevorzugt etwa 55° prägt. Durch den schrägen Verlauf der Kontaktflächen zur Horizontalen kann neben einem stabilen Stand eine äußerst kompakte Transportkonfiguration erzielt werden.

Gemäß der Erfindung sind sämtliche Stativbeine gerade ausgebildet und in der Transportkonfiguration parallel zueinander ausgerichtet , um ein besonders flaches Packmaß zu realisieren.

In Weiterbildung der Erfindung ist mit Vorteil vorgesehen, dass an dem Mittelteil des Stativkopfes eine verschwenkbare Geräteaufnahmeeinrichtung angeordnet ist. Im einfachsten Fall besteht die Geräteaufnahmeeinrichtung aus einer Befestigungsschraube, die in einem über einen Teil des Umfangs des Mittelteils verlaufenden Umfangsschlitz geführt ist und die mit einem Gerät, insbesondere einem Messgerät verschraubbar ist. Durch Verdrehen der Befestigungsschraube in dem Umfangsschlitz kann eine insbesondere horizontale Ausrichtung des Gerätes erfolgen. Von Vorteil ist es, zusätzlich oder alternativ zu der Befestigungsschraube eine Zwischenplatte vorzusehen, auf die das Gerät aufsetzbar ist. Bevorzugt erfolgt die Befestigung des Gerätes auf der Zwischenplatte mittels der Befestigungsschraube, die durch eine Öffnung in der Zwischenplatte geführt ist. Dabei ist es weiter von Vorteil, die Zwischenplatte mit zwei Libellen zu versehen, um ein waagerechtes Ausrichten der Zwischenplatte mit Messgerät in zwei Ebenen zu erleichtern. Die Ausrichtung in der ersten Ebene erfolgt durch ein Verschwenken der Zwischenplatte, insbesondere zusammen mit der Befestigungsschraube um das Mittelteil des Stativkopfes. Die Ausrichtung in der zweiten Ebene erfolgt durch Verstellen mindestens eines der äußeren Stativbeine anhand der zweiten Libellenanzeige.

Bevorzugt erfolgt die Anordnung der das Mittelteil durchsetzenden Befestigungsschraube in einem Bereich zwischen dem mittleren Stativbein und einem äußeren Stativbein, wobei aus Materialeinspargründen und zur Verringerung des Packraumbedarfs das Mittelteil asymmetrisch ausgebildet ist. Durch die asymmetrische Ausbildung wird einseitig um ausreichend Platz zur Aufnahme der das Mittelteil durchsetzenden Befestigungsschraube geschaffen. Bei gleichem Neigungswinkel β der Schwenkebenen liegt der Schnittpunkt der Schwenkachsen der beiden Stativkopfgelenke bei einer asymmetrischen Ausbildung daher benachbart der Längsmittelachse des mittleren Stativbeins.

Um eine möglichst variable Ausführungsform zu erhalten, ist mit Vorteil vorgesehen, dass zumindest eines der Stativrohre, vorzugsweise sämtliche Stativrohre lösbar an dem zugehörigen Stativkopfteil befestigbar sind. Denkbar ist hier die Realisierung eines Schraub- oder Rastverschlusses. Gegebenenfalls können Schraub- und Rastverschluss auch kombiniert werden.

Eine besonders große Flexibilität wird erhalten, wenn zumindest zwei der drei Stativrohre des Stativs zu einer Klemmstange zusammenfügbar sind, die beispielsweise zwischen dem Boden und der Decke eines Raumes verklemmbar ist. Dabei ist eine Ausführungsform bevorzugt, bei der sämtliche Bestandteile, die zur Ausbildung der Klemmstange und Anordnung eines Gerätes, insbesondere eines Messgerätes an der Klemmstange benötigt werden, Teil des Stativs sind oder an dem Stativ befestigt sind, so dass auf einer Verpackung von Einzelelementen verzichtet werden kann. Dem Stativkopf kommt dabei die zentrale Aufgabe zu, die Stativbeine und etwaige an den Stativbeinen oder am Stativkopf angeordnete Bauteile zusammenzuhalten. Der Stativkopf hat somit Verpackungscharakter. Zumindest zwei der Stativbeine können zur Bildung der Klemmstange beispielsweise ineinander verrastet oder verschraubt werden oder es kann ein sonstiges Stativbauteil, beispielsweise ein später noch zu erläuterndes Fußteil als Adapterstück dienen. Wesentlich ist, dass sämtliche Bauteile für die Klemmstange Teil des Stativs oder an diesem festgelegt sind.

Um die Klemmstange nicht nur bei einer einzigen Raumhöhe verwenden zu können, sondern an unterschiedliche Raumhöhen anpassen zu können, ist eine Ausführungsform bevorzugt, bei der vorzugsweise ausschließlich ein Stativbein längenveränderbar ausgebildet ist. Es ist zwar denkbar zwei oder alle drei Stativbeine längenveränderbar auszubilden, wobei ausschließlich ein längenveränderbares Stativbein von Vorteil ist, um ein besonders robustes und einfaches sowie flexibles Stativ bereitzustellen, das mit möglichst wenig verstellbaren Elementen auskommt.

Zur Anbringung eines Gerätes, insbesondere eines Messgerätes ist bevorzugt an mindestens einem der Stativbeine bei der Konfiguration der Vorrichtung als Stativ eine zusätzliche Geräteaufnahmeeinrichtung lösbar befestigt, vorzugsweise mittels eines integralen Klemmmechanismus geklemmt, wobei die Geräteaufnahmevorrichtung zur Festlegung eines Gerätes, insbesondere eines Messgerätes in der Klemmstangenkonfiguration ermöglicht. Es ist auch eine Ausführungsform denkbar, bei der eine gemeinsame Geräteaufnahmeeinrichtung zur Festlegung eines Messgerätes in der Stativkonfiguration als auch in der Klemmstangenkonfiguration vorgesehen ist.

Um einen sicheren Stand des Stativs auf einer ebenen Oberfläche zu gewährleisten und gleichzeitig eine Abstützung am Boden und der Decke für die Klemmstange zu bilden, sind die Stativbeine in Ausgestaltung der Erfindung mit einem verbreiterten Fußteil ausgestattet, welches bevorzugt gelenkig, insbesondere über ein Kugelgelenk mit dem jeweiligen Stativbein verbunden ist.

Um eine besonders komfortable Handhabung der Klemmstange zu ermöglichen, ist mindestens eines, vorzugsweise ausschließlich eines der Stativbeine mit einem Federelement ausgestattet, mit dem die Klemmstange zwischen zwei beabstandeten Objekten klemmbar ist. Es ist von Vorteil, das Federelement mit einem Fußteil zu verbinden, welches durch die Federwirkung in axialer Richtung von dem Stativbein weg federkraftbeaufschlagt wird. Ebenso ist es denkbar, das Verschieberohr einer Teleskopspange axial federnd an dem Hauptrohr abzustützen.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine perspektivische Darstellung eines Ausführungsbeispiels eines Stativs in einer Stativkonfiguration,
- Fig. 2:: das Stativ gemäß Fig. 1 in einer zusammengeklappten Transportkonfiguration in einer Seitenansicht,
- Fig. 3:: eine um 90° gedrehte Ansicht des Stativs in der Transportkonfiguration gemäß Fig. 2,
- Fig. 4:: eine Längsschnittansicht durch einen Stativkopf,
- Fig. 5:: eine Schnittdarstellung des Stativkopfes mit Geräteaufnahmeeinrichtung,
- Fig. 6:: das Stativ in Transportkonfiguration mit einem Tragegurt und
- Fig. 7:: zeigt eine ausschließlich aus Bestandteilen des Stativs 1 zusammengesetzte Klemmstange.

In den Figuren sind gleiche Bauteile und Bauteile mit der gleichen Funktion mit den gleichen Bezugszeichen gekennzeichnet.

### Ausführungsformen der Erfindung

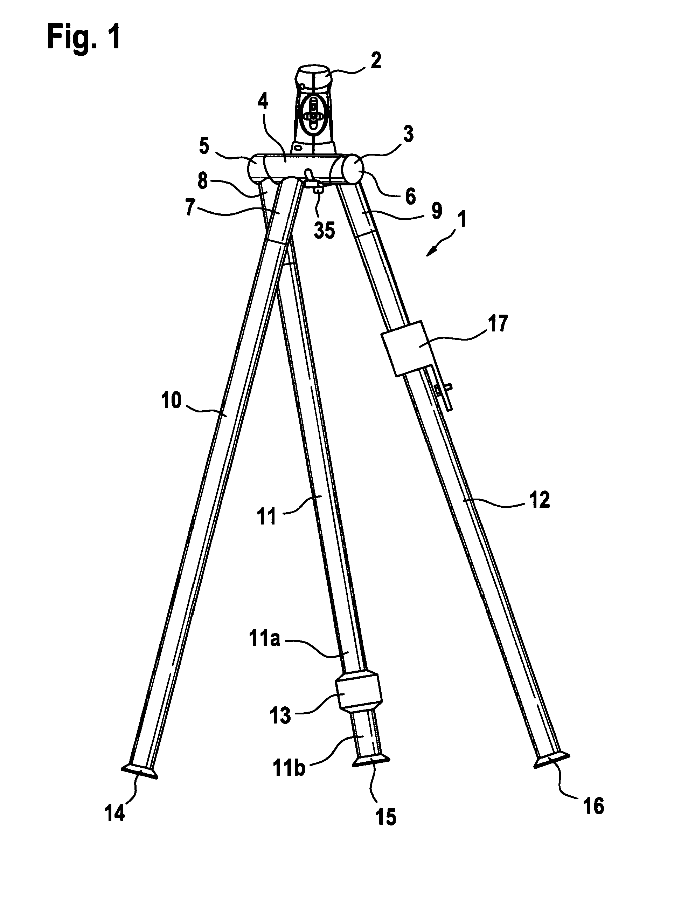

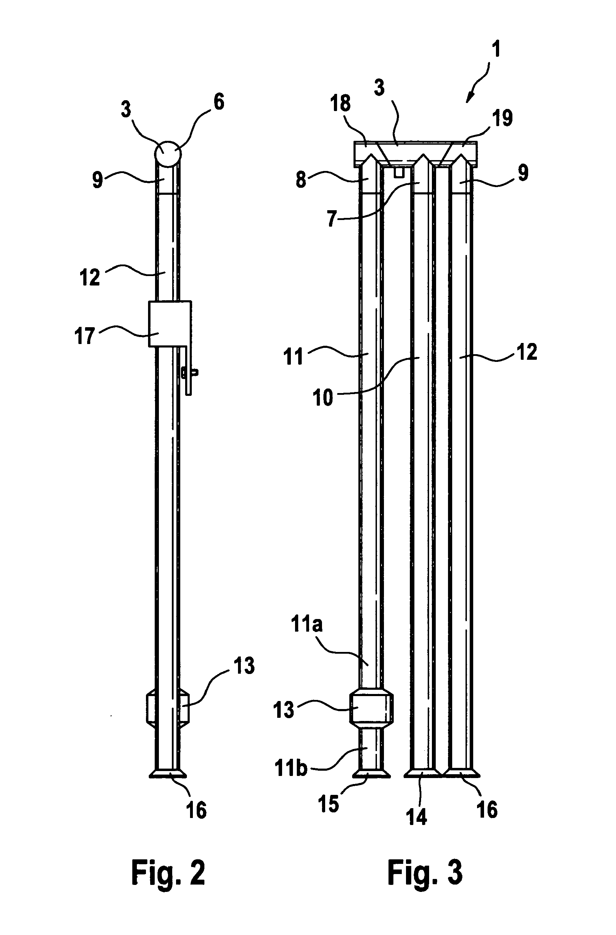

In den Fig. 1 bis 3 ist ein Stativ 1 für ein Messgerät 2 (Nivelliergerät) dargestellt. Das Stativ 1 umfasst einen Stativkopf 3 mit einem Mittelteil 4, einem ersten Seitenteil 5 und einem zweiten Seitenteil 6, wobei die Seitenteile 5, 6 mit gegenüberliegenden Seiten des Mittelteils 4 angelenkt sind. Das Mittelteil 4, das erste Seitenteil 5 und das zweite Seitenteil 6 weisen jeweils einen zylindrischen, geraden Aufnahmefortsatz 7, 8, 9 auf, in denen jeweils ein Stativbein 10, 11, 12 lösbar aufgenommen ist. Dabei sind das mittlere Stativbein 10 und das in der Zeichnungsebene rechte Stativbein 12 jeweils als einfache Zylinderstange ausgebildet, wohingegen das in Fig. 3 linke Stativbein als zweiteilige Teleskopstange ausgebildet ist, so dass die wirksame Länge des linken Stativbeins 11 veränderbar ist. Hierzu ist in einer Hauptstange 11a eine Verschiebestange 11b aufgenommen, die in einer beliebigen Relativposition zu der Hauptstange 11a mittels einer Überwurfklemmmutter 13 festlegbar ist. Jedes Stativbein 10, 11, 12 weist an seinem unteren, freien Ende jeweils ein tellerförmiges Fußteil 14, 15, 16 auf. Bevorzugt ist jedes Fußteil 14, 15, 16 mit dem zugehörigen Stativbein 10, 11, 12 über ein nicht dargestelltes Kugelgelenk gelenkig verbunden.

An dem in der Zeichnungsebene rechten Stativbein 12 ist mittels eines nicht gezeigten Klemmmechanismus eine Geräteaufnahmeeinrichtung 17 festgelegt, deren Funktion später noch erläutert werden wird.

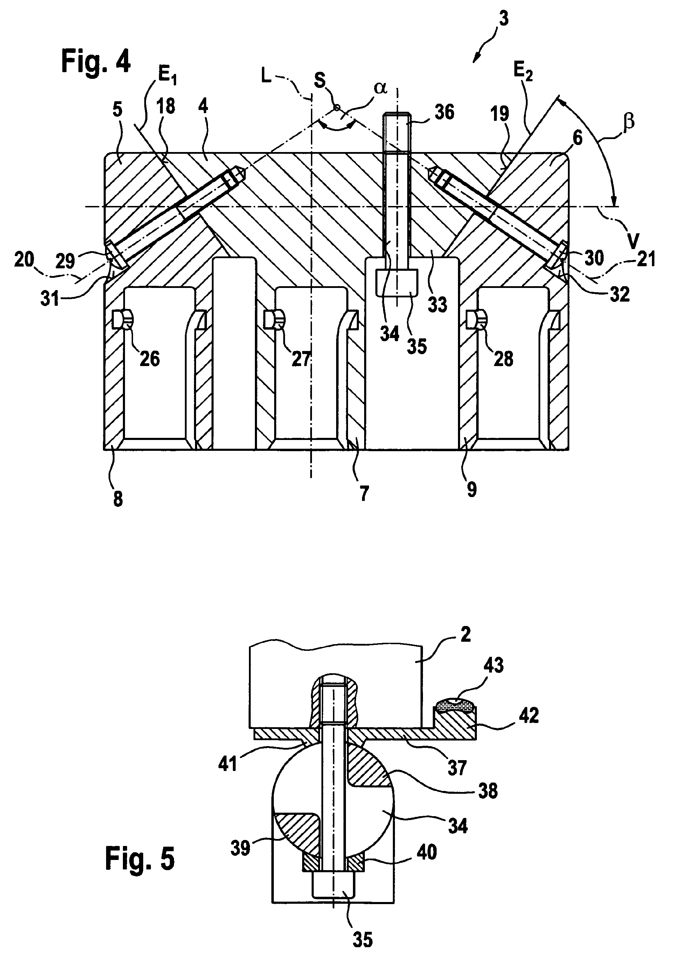

In den Fig. 2 und 3 ist das Stativ 1 in einer zusammengelegten Transportkonfiguration gezeigt, wobei die drei Stativbeine 10, 11, 12 sowie die zugehörigen Aufnahmefortsätze 7, 8, 9 parallel zueinander ausgerichtet sind, so dass das sich die ergebende Transportkonfiguration, wie insbesondere aus Fig. 2 ersichtlich ist, äußerst flach ist. Um diese flache Transportkonfiguration bei gleichzeitig sicherem Stand als Stativ (Fig. 1) zu realisieren, sind die Seitenteile 5, 6 über jeweils ein Gelenk 18, 19 mit dem Mittelteil 4 verbunden, wobei die Schwenkachsen 20, 21 (vgl. Fig. 4) der beiden Gelenke 18, 19 einen Winkel α von in diesem Ausführungsbeispiel etwa 110° einschließen.

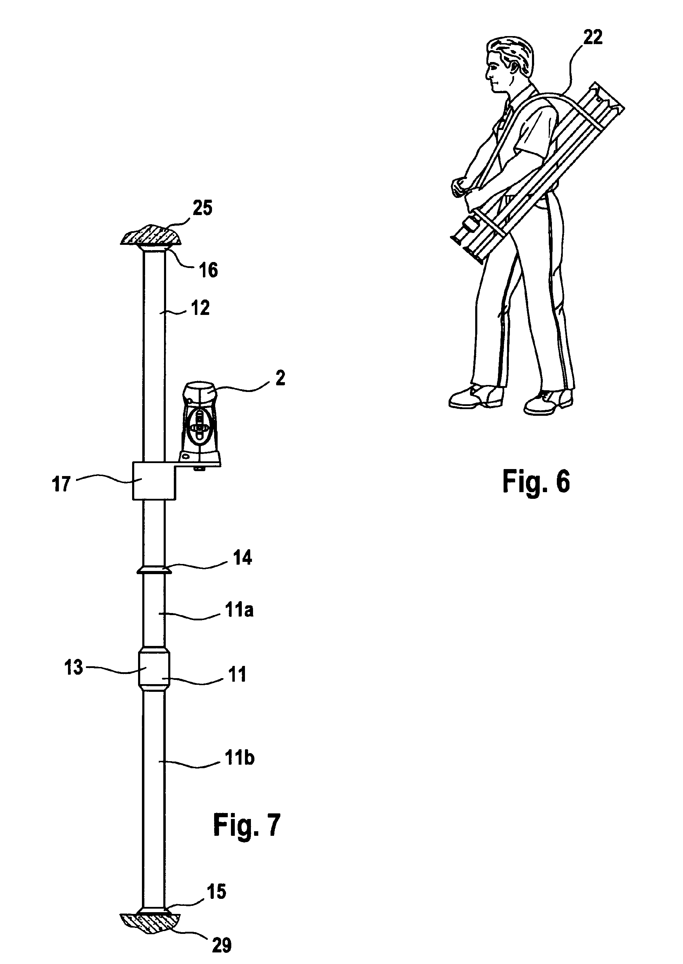

In Fig. 6 ist eine Ausführungsform mit Tragegurt 22 gezeigt, welcher einends am Stativkopf 3 und anderenends an dem Stativbein 12 festgelegt ist, um einen komfortablen Transport des Stativs 1 in der Transportkonfiguration (vgl. Fig. 2 und 3) zu ermöglichen.

In Fig. 7 ist eine Klemmstange 23 gezeigt, die aus den Stativbeinen 11 (Teleskopstange) und der Stativstange 12 gebildet wurde. Die Klemmstange 23 stützt sich am Boden 24 mit dem Fußteil 15 und an der Decke 25 mit dem Fußteil 16 ab. Um den Abstand zwischen Boden 24 und Decke 25 zu überwinden, ist die Verschiebestange 11b weit aus der in Fig. 7 verkürzt dargestellten Hauptstange 11a des Stativbeins 11 ausgezogen und in ihrer Lage mittels der Überwurfmutter 13 fixiert. Gegebenenfalls kann eines der Fußteile 15, 16 mit einer Feder zur Verspannung der Klemmstange 23 ausgestaltet sein. Anstelle des Vorsehens eines reinen Schiebemechanismus ist es auch denkbar, die Stange 11b mit einem Außengewinde in einem Innengewinde der Hauptstange 11a verdrehbar aufzunehmen. Im gezeigten Ausführungsbeispiel sind die beiden Stativbeine 10, 12 mittels des als Adapter dienenden dritten Fußteils 14 aneinander befestigt. Es ist auch denkbar die entsprechenden Stativstangenenden als Steck- oder Schraubverbindung auszubilden.

An dem in der Zeichnungsebene oberen Stativbein 12 ist die Geräteaufnahme 17 klemmend mit dem daran befestigten Messgerät 2 festgelegt.

In Fig. 4 ist der Stativkopf 3 in einer Längsschnittansicht gezeigt. Zu erkennen ist das Mittelteil 4 mit seinem zylindrischen Aufnahmeabschnitt 7 sowie die beiden Seitenteile 5, 6 mit ihrem jeweiligen Aufnahmeabschnitt 8, 9. In jedem Aufnahmeabschnitt 7, 8, 9 ist eine Rastfeder 26, 27, 28 vorgesehen, mittels der das entsprechende Stativbein 10, 11, 12 rastend fixiert werden kann. Die Stativbeine 10, 11, 12 sind dabei untereinander austauschbar.

Das in der Zeichnungsebene linke erste Seitenteil 5 ist über das erste Schwenkgelenk 18 an dem Mittelteil angebunden und entsprechend ist das zweite Teil 6 über das zweite Schwenkgelenk 19 an dem Mittelteil verschwenkbar befestigt. Kern jedes Gelenks 18, 19 bildet jeweils eine in das Mittelteil 4 verschraubte Gelenkschraube 29, 30, deren Schraubenköpfe in jeweils einer schräg eingebrachten Ausnehmung 31, 32 des ersten bzw. zweiten Seitenteils 5, 6 versenkt sind. Die Gelenkschrauben 29, 30 definieren dabei jeweils eine Schwenkachse 20, 21, wobei sich die beiden Schwenkachsen 20, 21 unter einem Winkel α von in diesem Ausführungsbeispiel 110° schneiden. Der Schnittpunkt S der beiden Gelenkachsen 20, 21 ist in der Zeichnungsebene rechts beabstandet von einer zentrisch durch den Aufnahmeabsatz 7 des Mittelteils 4 verlaufenden Längsachse L.

Zwischen dem ersten Seitenteil 5 und dem Mittelteil 6 ist eine erste Schwenkebene E₁ ausgebildet, und zwischen dem zweiten Seitenteil 6 und dem Mittelteil 4 ist eine zweite Schwenkebene E₂ ausgebildet. Beide Schwenkebenen E₁, E₂ sind schräg angeordnet und verlaufen winklig zueinander. Eine Verbindungsachse V, die quer zur Längsachse 11 verläuft und die beiden Schwenkachsen 20, 21 schneidet schließt mit jeder Schwenkebenen E1, E2 einen Winkel von in diesem Ausführungsbeispiel β = 55° ein.

Aus Fig. 4 ist zu erkennen, dass das Mittelteil 4 asymmetrisch ausgebildet ist. Der Abstand zwischen dem in der Zeichnungsebene rechten Aufnahmeabschnitt 9 zu dem mittleren Aufnahmeabschnitt 7 ist etwa doppelt so groß wie der Abstand zwischen dem in der Zeichnungsebene linken Aufnahmeabschnitt 8 und dem mittleren Aufnahmeabschnitt 7. In dem verlängerten Querabschnitt 33 des Mittelteils 4 ist in einem Schlitz 34 eine Befestigungsschraube 35 aufgenommen, die mittels ihres Außengewindes 36 mit einem Messgerät verbindbar ist, wodurch das Messgerät gegen das Mittelteil 4 verspannt werden kann.

In Fig. 5 ist eine Anordnung der in Fig. 4 gezeigten Befestigungsschraube 4, die Teil einer Geräteaufnahmeeinrichtung 37 ist, gezeigt. Der Schlitz 34 ist derart ausgebildet, dass die Befestigungsschraube 34 in Umfangsrichtung zwischen zwei Anschlägen 38, 39 um etwa 90° verschwenkbar ist. Um eine erleichterte Verstellung der Befestigungsschraube 35 zu gewährleisten, ist zwischen dem Schraubenkopf der Befestigungsschraube und dem Mittelteil 4 ein Gleitelement 40 angeordnet, das den Schlitz 34 in seitlicher Richtung überragt. Dem Gleitelement 40 gegenüberliegend ist ein weiteres Gleitelement 41 angeordnet, das Teil einer Zwischenplatte 42 ist, gegen die ein Messgerät 2 mit der die Zwischenplatte 42 durchsetzenden Befestigungsschraube 35 verschraubt ist. Zur erleichterten Ausrichtung der Zwischenplatte 42 mit Messgerät 2 sind an der Zwischenplatte 42 zwei rechtwinkelig zueinander angeordnete Libellen angeordnet, wobei in der gezeigten Schnittansicht nur eine Libelle 43 zu erkennen ist.

## Patentansprüche

1. Stativ mit einem Stativkopf (3) und mit drei Stativbeinen (10, 11, 12), wobei der Stativkopf (3) ein erstes und ein zweites Seitenteil (5, 6) sowie ein Mittelteil (4) aufweist, welches mit dem ersten Seitenteil (5) mittels eines ersten Gelenks (18) mit einer ersten Schwenkachse (20) und mit dem zweiten Seitenteil (6) mittels eines zweiten Gelenks (19) mit einer zweiten Schwenkachse (21) verbunden ist, wobei dem Mittelteil (4) sowie den beiden Seitenteilen (5, 6) jeweils eines der Stativbeine (10, 11, 12) zugeordnet ist, und wobei sämtliche Stativbeine (10, 11, 12) gerade ausgebildet und parallel zueinander ausrichtbar sind, **dadurch gekennzeichnet, dass** ein Schnittpunkt (S) der Schwenkachsen (20, 21) beabstandet von einer Längsmittelachse (L) des dem Mittelteil (4) zugeordneten Stativbeins (10) liegt, und wobei die beiden Schwenkachsen (20,21) und die Längsmittelachse (L) in einer Fläche liegen.

2. Stativ nach Anspruch 1, **dadurch gekennzeichnet, dass** die beiden Schwenkachsen (20, 21) einen Winkel 0° < α <180°

3. Stativ nach einem der vorhergehenden Ansprüche, **dadurch gekennzeichnet, dass** an dem Mittelteil (4) eine relativ zu dem Mittelteil (4) verschwenkbare Gerätaufnahmeeinrichtung (37) angeordnet ist.

4. Stativ nach einem der vorhergehenden Ansprüche, **dadurch gekennzeichnet, dass** zumindest eines der Stativbeine (10, 11, 12), vorzugsweise sämtliche Stativbeine (10,11, 12), lösbar an dem Stativkopf (3) befestigbar sind.

5. Stativ nach Anspruch 4, **dadurch gekennzeichnet, dass** zumindest zwei der Stativbeine (10, 11, 12) zu einer längenveränderbaren zwischen zwei zueinander beabstandeten Begrenzungen klemmbaren Klemmstange (23) zusammensetzbar sind.

6. Stativ nach einem der vorhergehenden Ansprüche, **dadurch gekennzeichnet, dass** mindestens eines, vorzugsweise ausschließlich eines der Stativbeine (10, 11, 12) als längenveränderbare Stange, insbesondere Teleskopstange, ausgebildet ist.

7. Stativ nach einem der vorhergehenden Ansprüche, **dadurch gekennzeichnet, dass** an mindestens eines der Stativbeine (10, 11, 12) eine zweite Gerätaufnahmeeinrichtung (17) lösbar befestigt ist.

8. Stativ nach einem der vorhergehenden Ansprüche, **dadurch gekennzeichnet, dass** mindestens eines der Stativbeine (10, 11, 12), vorzugsweise mindestens zwei der Stativbeine (10, 11, 12), insbesondere gelenkig, mit einem, bevorzugt tellerförmigen, Fußteil (14, 15, 16) verbunden sind.

9. Stativ nach einem der vorhergehenden Ansprüche, **dadurch gekennzeichnet, dass** eines der Stativbeine (10, 11, 12) mindestens ein in axialer Richtung wirkendes Federelement umfasst.

## Claims

1. Tripod with a tripod head (3) and with three tripod legs (10, 11, 12), wherein the tripod head (3) has a first side part and a second side part (5, 6) and a central part (4), which is connected to the first side part (5) by means of a first articulation (18) with a first pivot axis (20) and is connected to the second side part (6) by means of a second articulation (19) with a second pivot axis (21), wherein the central part (4) and the two side parts (5, 6) are each assigned one of the tripod legs (10, 11, 12), and wherein all the tripod legs (10, 11, 12) are of rectilinear design and can be aligned parallel to one another, **characterized in that** a point of intersection (S) of the pivot axes (20, 21) is spaced apart from a longitudinal centre axis (L) of the tripod leg (10), which is assigned to the central part (4), and wherein the two pivot axes (20, 21) and the longitudinal centre axis (L) lie in a single surface.

2. Tripod according to Claim 1, **characterized in that** the two pivot axes (20, 21) enclose an angle 0° < α < 180°.

3. Tripod according to one of the preceding claims, **characterized in that** the central part (4) has arranged on it a unit-receiving device (37), which can be pivoted relative to the central part (4).

4. Tripod according to one of the preceding claims, **characterized in that** at least one of the tripod legs (10, 11, 12), preferably all the tripod legs (10, 11, 12), can be fastened in a releasable manner on the tripod head (3).

5. Tripod according to Claim 4, **characterized in that** at least two of the tripod legs (10, 11, 12) can be assembled to form an alterable-length clamping rod (23) which can be clamped between two spaced-apart boundaries.

6. Tripod according to one of the preceding claims, **characterized in that** at least one, preferably exclusively one, of the tripod legs (10, 11, 12) is designed as an alterable-length rod, in particular telescopic rod.

7. Tripod according to one of the preceding claims, **characterized in that** a second unit-receiving device (17) is fastened in a releasable manner on at least one of the tripod legs (10, 11, 12).

8. Tripod according to one of the preceding claims, **characterized in that** at least one of the tripod legs (10, 11, 12) is, preferably at least two of the tripod legs (10, 11, 12) are, connected, in particular in an articulated manner, to a preferably disc-like foot part (14, 15, 16).

9. Tripod according to one of the preceding claims, **characterized in that** one of the tripod legs (10, 11, 12) comprises at least one axially acting spring element.

## Revendications

1. Trépied comprenant une tête de trépied (3) et trois pieds de trépied (10, 11, 12), la tête de trépied (3) présentant une première et une deuxième partie latérale (5, 6) ainsi qu'une partie centrale (4) qui est connectée à la première partie latérale (5) au moyen d'une première articulation (18) ayant un premier axe de pivotement (20) et à la deuxième partie latérale (6) au moyen d'une deuxième articulation (19) ayant un deuxième axe de pivotement (21), un des pieds de trépied (10, 11, 12) étant associé à chaque fois à la partie centrale (4) ainsi qu'aux deux parties latérales (5, 6), et tous les pieds de trépied (10, 11, 12) étant réalisés sous forme droite et pouvant être orientés parallèlement les uns aux autres, **caractérisé en ce qu'**un point d'intersection (S) des axes de pivotement (20, 21) est espacé d'un axe médian longitudinal (L) du pied de trépied (10) associé à la partie centrale (4), et les deux axes de pivotement (20, 21) et l'axe médian longitudinal (L) se situant dans une surface.

2. Trépied selon la revendication 1, **caractérisé en ce que** les deux axes de pivotement (20, 21) forment un angle 0° < α < 180°.

3. Trépied selon l'une quelconque des revendications précédentes, **caractérisé en ce qu'**un dispositif de réception d'un appareil (37) pouvant pivoter par rapport à la partie centrale (4) est disposé sur la partie centrale (4).

4. Trépied selon l'une quelconque des revendications précédentes, **caractérisé en ce qu'**au moins l'un des pieds de trépied (10, 11, 12), de préférence tous les pieds de trépied (10, 11, 12), peuvent être fixés de manière amovible à la tête de trépied (3).

5. Trépied selon la revendication 4, **caractérisé en ce qu'**au moins deux des pieds de trépied (10, 11, 12) peuvent être assemblés pour former une tige de serrage (23) de longueur variable pouvant être serrée entre deux limites espacées l'une de l'autre.

6. Trépied selon l'une quelconque des revendications précédentes, **caractérisé en ce qu'**au moins l'un, de préférence exclusivement l'un des pieds de trépied (10, 11, 12), est réalisé sous forme de tige de longueur variable, en particulier de tige télescopique.

7. Trépied selon l'une quelconque des revendications précédentes, **caractérisé en ce que** sur au moins l'un des pieds de trépied (10, 11, 12) est fixé, de manière amovible, un deuxième dispositif de réception d'un appareil (17).

8. Trépied selon l'une quelconque des revendications précédentes, **caractérisé en ce qu'**au moins l'un des pieds de trépied (10, 11, 12), de préférence au moins deux des pieds de trépied (10, 11, 12), sont connectés notamment de manière articulée à une partie de base (14, 15, 16), de préférence en forme de coupelle.

9. Trépied selon l'une quelconque des revendications précédentes, **caractérisé en ce qu'**un des pieds de trépied (10, 11, 12) comprend au moins un élément de ressort agissant dans la direction axiale.
